# EUROPEAN PATENT SPECIFICATION

(11) **EP 0 381 286 B1**
(45) Date of publication and mention of the grant of the patent: **15.09.1993**
(21) Application number: 90200205.4
(22) Date of filing: 29.01.1990
(51) Int. Cl.: B05D 3/04, B05C 9/10, C03C 17/00

(54) **Process of electrostatic coating, suitable in particular for articles made from a nonconducting material, and facility for practicing it**
Verfahren und Vorrichtung zur elektrostatischen Beschichtung, insbesondere für nichtleitende Werkstoffe
Procédé et appareil de revêtement par voie électrostatique, en particulier pour les matériaux non conducteurs

(30) Priority: 02.02.1989 IT 1929889
(43) Date of publication of application: 08.08.1990
(73) Proprietor: BETA RICERCHE E SVILUPPI S.A.S. DI BERNASCONI E C., I-28015 Alzate di Momo, Novara (IT)
(72) Inventor: Bernasconi, Attilio, I-28015 Alzate Di Momo, Novara (IT)
(74) Representative: Appoloni, Romano

(56) References cited:
- PATENT ABSTRACTS OF JAPAN, vol. 9, no. 192 (C-296)[1915], 8th August 1985;& JP-A-60 061 078 (NISSAN JIDOSHA K.K.) 08-04-1985

## Description

Among the several painting methods known in the art, the electrostatic painting method is particularly appreciated above all thanks to the possibility of obtaining homogeneous coatings with layers of reduced thickness of paint applied onto the article to be painted, with advantages of an improved aesthetical nature at low costs being achieved.

It is well known that whilst in general no particular problems arise in paint application in case of electrostatic painting of electrical conducting bodies, such as metal bodies, evident problems arise when one wishes to apply an electrostatic painting process to non-conducting materials, such as, e.g., glass.

For some shapes of non-conducting bodies, such as, in general hollow bodies, such as bottles or vases or pots, it was thought in the past, in order to obviate the problem, of, e.g., inserting inside the interior of the non-conducting article a core made from a metal material. Such a core attracts by electrostatic effect the electrically charged painting product, which can hence stick to the body.

This result is made possible by establishing between the electrode of the paint feeder and the core which supports the article to be painted inside a very intense electrical field, of several thousand Volts (up to 100,000 V); no matter how much insulating the body to be coated is, an electrostatic effect and the consequent painting of the articles is anyway obtained. Such a technique is unfortunately limited: it can be carried out in fact on hollow bodies only, and with a considerable overspray (a waste of painting material), with an uneven distribution of the painting product and, often, unsatisfactory aesthetical results.

Another technique for making it possible non-conducting materials to be painted by means of an electrostatic painting process, consists in dipping the articles into the damp environment artificially created by a humidifier. The water vapour generated by this latter adheres, owing to the effect of surface tension, to the glass support, generating a layer of water condensate on it. Inasmuch as water is a very good conductor, the article can then be painted by an electrostatic painting process.

Unfortunately, water vapour tends to uniformly deposit on simple shapes only, whilst on articles with complex geometries it adheres in an absolutely uneven way, consequently originating the same unevenness in the layer of paint which is subsequently applied by electrostatic painting.

The unevenness of the layer of condensate can in some cases even cause water tears to be formed on the treated article, with consequent unaesthetic results in paint application. Not only, but, inasmuch as the paint coating has to be subsequently submitted to an oven baking, during such a successive step, possible accumulations of water condensate would evaporate, with the possible disastrous result that paint would be lifted and detached from the support at those points.

As one can see, the technique of electrostatic painting of non-electricity-conducting articles has to confront several problems so that many times the manufacturers preferred to paint such materials according to different techniques, like the technique consisting in pre-heating the article to be painted, and subsequently applying the paint powder, which adheres to the heated article by getting melted on it. This kind of painting, however, is not so efficient and advantageous as the electrostatic painting procedure would be.

JP-A-60 061 078 discloses a process of electrostatic painting of articles, in particular of articles made from non-electrical current-conducting material, which mentions the use of cooled air, leading to condensation of water vapour on the surface of the material to be painted.

The main purpose of the present invention is of providing a method for painting by means of the electrostatic painting process articles difficult to be painted by means of such a technique, such as, precisely, those made from a non-electricity-conducting material, such as, in particular, glass.

In fact, according to the present invention it is desired to be able to accomplish also on non-conducting supports all of the usual advantages which are connected with the electrostatic painting, such as those which can be accomplished on conducting materials. More generally, the present invention aims at providing a new advantageous method of electrostatic painting, which can be carried out independently on the type of support to be painted.

In order to accomplish such purposes,and still other advantages which will be clear from the following disclosure, the present invention proposes a process of electrostatic painting articles according to claim 1.

Said cryogenic gas, as such, or as a mixture, is selected from among the following ones:
- carbon dioxide boiling point -78.5°C
- nitrogen -195.8°C
- argon -185.8°C

In order to better illustrate characteristics and advantages of the present invention, an example of practical embodiment thereof, which is non-limitative of the same invention, is disclosed in the following by referring to the figures in the hereto attached drawings.

Figure 1 shows a block flow diagram of the process according to the present invention.

Figure 2 shows a chart referred to the process,

Figure 3 schematically shows a side elevation view of a portion of a suitable facility for practicing the process according to the present invention, in which the chilling chamber is evidenced.

Figure 4 shows a front elevation view of the portion of the facility shown in Figure 3.

Figures 5 and 6 show a different form of practical embodiment of the structure shown in Figures 3 and 4.

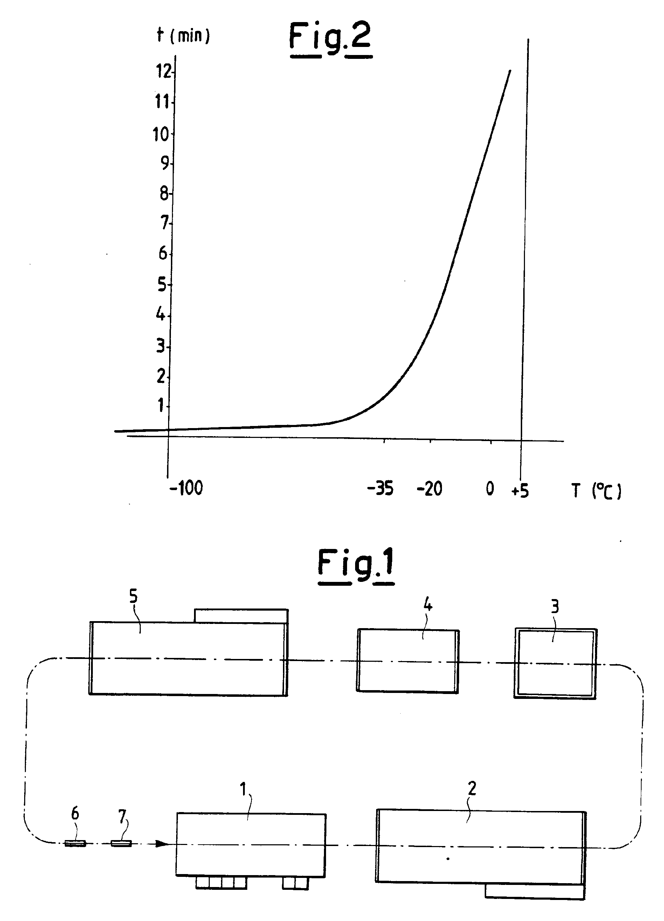

As shown in Figure 1, a process according to the present invention comprises a charging station 7 at which the articles to be painted are charged to supports, or to a conveyor. belt continuously running through the various steps of the process, a de-greasing station 1, a drier 2 for drying the articles, a chilling station 3 according to the present invention, a painintg station 4 and finally an oven 5 inside which the paint coating applied to the articles is set.

The painted articles are finally discharged at the station 6 from the supports, which in such a way are made free of receiving a new load.

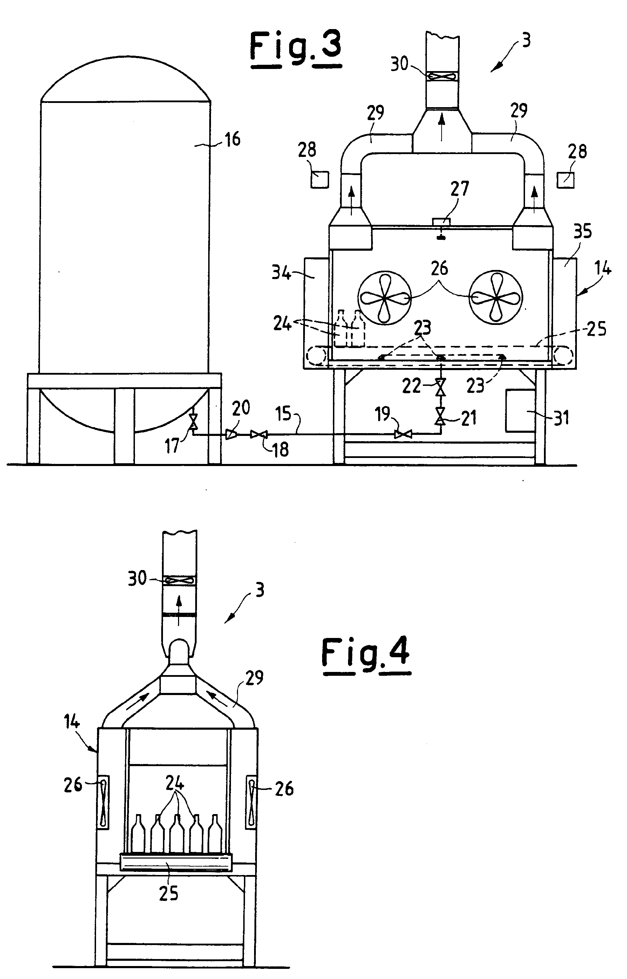

Describing in detail the steps 7, 1, 2, 4, 5 and 6 is not necessary, in that they are substantially the same steps as of the electrostatic painting processes and facilities for painting electrical conductor materials, known from the prior art. The invention specifically relates to the addition to said facilities of a type known from the prior art, of the chilling station, or chilling module, 3, such as shown, e.g., in Figures 3 to 6.

Referring in particular to the form of practical embodiment shown in Figures 3 and 4, a chilling station 3 comprises a chilling chamber 14 suitably dimensioned according to the dimensions of the materials to be treated, made, e.g., from stainless steel or from special aluminum alloys, thermally insulated by means of insulating materials of the type of fossil flour or perlite, assembled by means of an arc welding process with a stainless-steel electrode, or by means of a Tig braze-welding process.

The chamber 14 is connected by means of the thermally-insulated pipe 15 with a tank 16 of a cryogenic gas in the liquid state, suitable for the purposes of the present invention, such as, e.g., liquid nitrogen. Along the pipe 15 valves 17, 18 and 19, as well as a pressure reducer 20, are installed. In the immediate nearby of the chamber 14, a hand-operated on-off valve 22 and an electrovalve 21 are installed on the pipe 15. These valves control the feed of the liquid gas into the chamber 14 through spray nozzles 23.

In the form of practical embodiment depicted in Figures 3 and 4, the articles to be painted, e.g., bottles 24, run through the chamber 14 transported by a conveyor belt 25. Electric fans 26 are furthermore provided in order to make uniform the distribution of the cryogenic gas; temperature control means 27 for regulating the temperature inside the chilling chamber; oxygen detecting means 28 for detecting the oxygen contained in the atmosphere which surrounds the chamber 14; and gas conveyance/discharge means 29 in order to discharge the exhausted cryogenic gas from the same chilling chamber, by means of the gas-sucking electric fan 30, are provided as well. Finally, an electrical control board 31 controls all of the necessary operating steps. The feed of the liquid gas into the interior of the chilling chamber is obtained thanks to the pressure drop existing between the liquid gas tank 16 and the chilling chamber 14, which pressure drop is controlled by means of the pressure reducer and of the valves operating along the pipe 15.

The cryogenic gas in its liquid state is fed into said chilling chamber by means of the spray nozzles 23 and, when it comes into contact with the air contained inside the same chamber, it turns into its gas state, releasing its content of refrigerating units, which refrigerate the interior of the same chamber. The temperature is reached and kept constant by means of a thermoregulation system and is rendered uniform throughout the chamber by means of electric fans 26 purposely manufactured for low-temperature use. The systems of cryogenic electrovalves intercept the feed of cryogenic gas in the liquid state, both for the purposes of the regulation of the temperature of the chamber, and for securing the safety of the operators and of the surrounding environment.

Inasmuch as nitrogen, as well as the other inert gases, are asphyxiants, the detection means 28 detect the possible formation of under-oxygenated atmospheres.

In order to prevent such a phenomenon from occurring, the chamber 14 is provided with the electric fans 30, with the associated means for evacuating the exhausted cold gas phase, so as to keep the surrounding operating area within safety limits.

The inlet and outlet doors, respectively 34 and 35, through which the pieces 24 respectively enter the chamber 14 and leave it, will be suitably equipped with structures acting as forechambers in order to minimize the heat exchange with the surrounding environment, and to improve the efficiency of the system.

The operating way of the above disclosed facility is disclosed now.

The articles 24 to be painted are caused to pass through the steps of de-greasing and drying 2, and then, by being transported by the conveyor belt 25, they enter the chamber 14, inside which they are dipped into the cold gas phase generated by the evaporation of the inert, cryogenic gas sprayed in the liquid state through the spray nozzles.

Before the articles are caused to run through said chamber, the temperature inside the chilling chamber should be regulated at its steady-state value, of, let's assume, -35°C. On considering a room temperature of +15°C, a time of from 15 to 20 minutes is needed in order that the temperature of -35°C is reached inside the cryogenic chamber. In order that the ideal heat exchange may take place between the cryogenic gas and the articles 24, a stay of said articles inside the chamber 14 of, e.g., from 1 to 5 minutes, is necessary, as determined by the length of the same chamber and the speed of the conveyor belt, besides the properties of the material the article to be painted is made from.

The chart shown in Figure 2 represents the shape of the ideal line of the stay time of the articles, on the ordinate, as a function of the temperature of the chilling chamber, on the abscissa. Such a line relates to the use of nitrogen as a cryogenic gas, and of glass as the non-conducting material.

The feed of cryogenic gas in the liquid state into the chamber 14 in order to keep a constant temperature inside it is commanded by the temperature regulation system 27, which detects the temperature inside the chamber and actuates the electrovalve 21 which controls the liquid gas feed.

The electric fans 26 mix the gas phase in order to equate the temperature throughout the interior of the chilling chamber and the electric fans 30 suck the exhausted gas -- i.e., the by now heated gas --, also preventing the possibility that an under-oxygenated atmosphere may be formed in the immediate nearby of the same chilling chamber.

Along the path running from the chilling station 3 to the station of application of the painting product 4, the immediate formation of a layer of frost on the surface of the bottles 24 takes place by direct turning of atmospheric humidity from the gas phase into the solid state. In fact, the water vapour contained in the environmental atmosphere is condensed on the surface of said articles owing to the effect of heat exchange with the same environment, and is immediately turned into frost due to the effect of the low temperature of the articles which leave the chilling chamber.

The so treated articles are transferred into the painting cabinet 4, coated by the thin layer of solid-state water (i.e., frost), homogeneously distributed throughout their surface, and with a constant thickness. Water is an electricity conductor, and therefore also the article made from the insulating material, when so treated, acquires the same characteristics as of conducting materials and is consequently suitable for receiving the electrostatic painting.

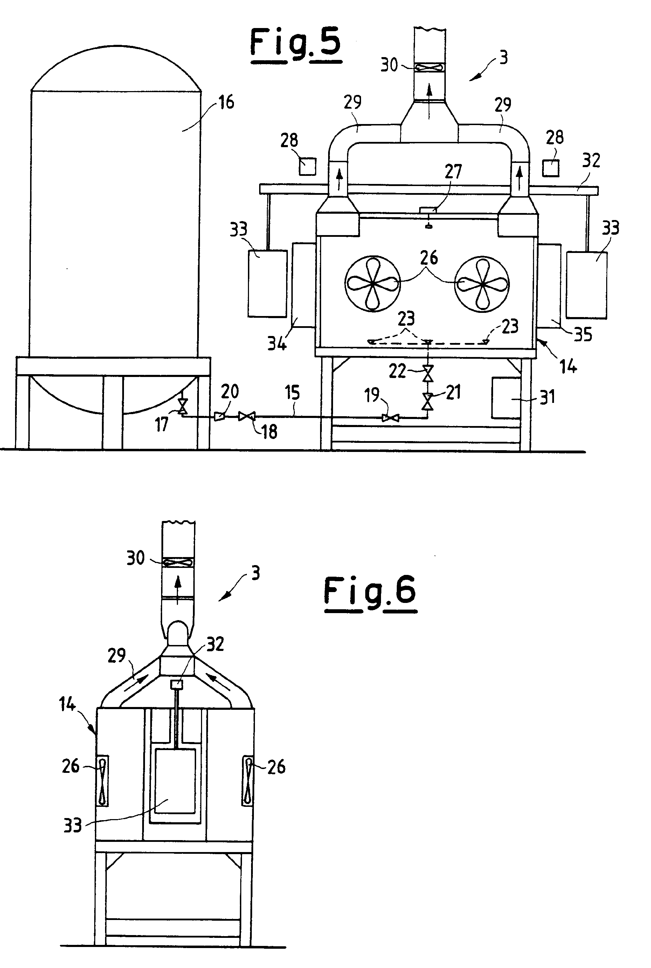

In the different form of practical embodiment shown in Figures 5 and 6, the articles to be painted are conveyed by an overhead conveyor 32 from which piece-carrying frames 33 extend.

The passage of the articles through the chilling chamber can take place continuously or batchwise.

Other parameters one should make due allowance for when practicing the process are the capability of water absorption by the material, its heat conductivity, its brittleness, as well as the mass of material on which one operates.

Some examples relevant to the practicing of the process according to the present invention are reported in the following.

### Example 1

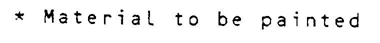

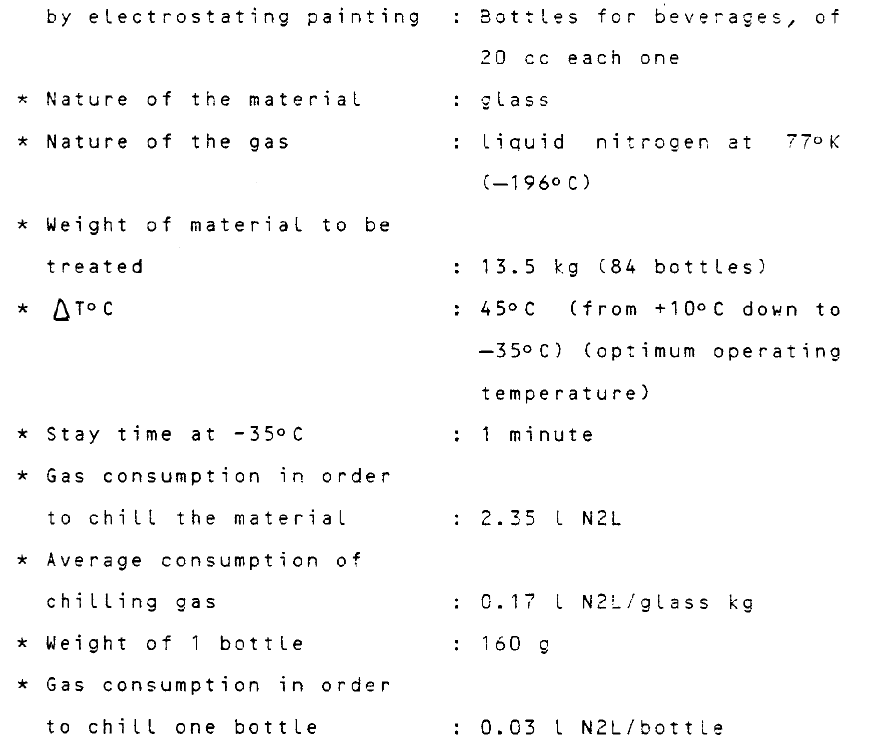

### Example 2

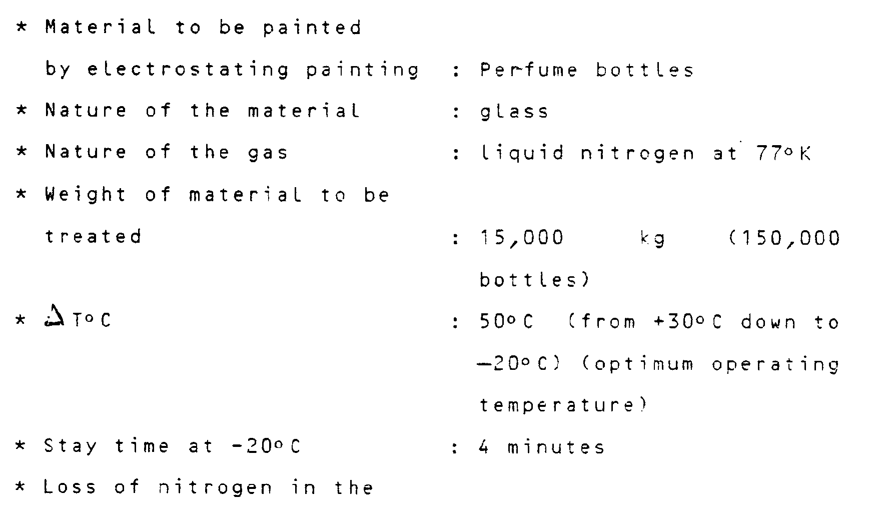

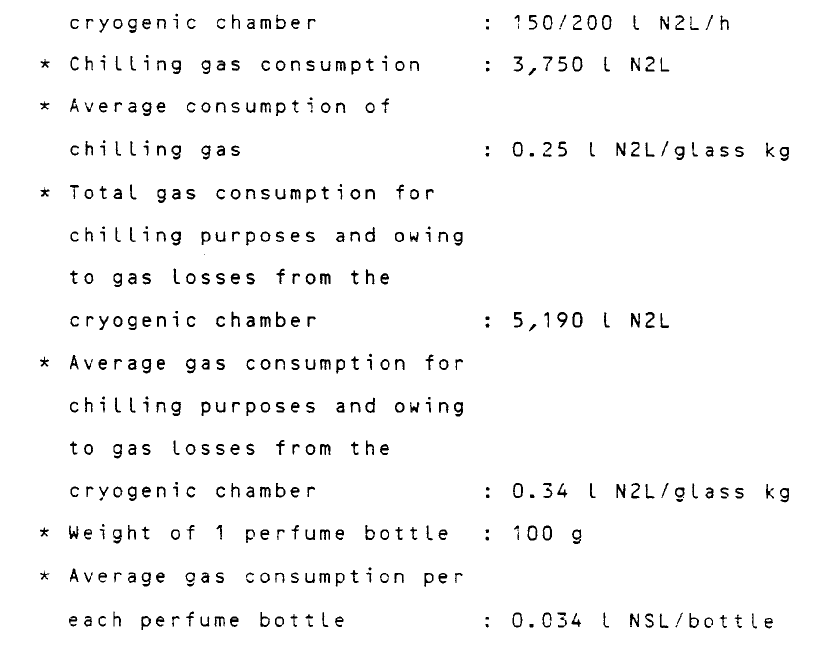

From the above, one can realize how the present invention makes it possible the initially stated purposes to be efficaciously accomplished. Summing-up, by means of the present invention the non-electrically-conducting materials can be reconducted to the conditions of the electrical conductor materials.

By operating under conducting material-like conditions, one can increase the efficiency of the process up to its maximal value, with therefore extremely homogeneous paintings, possibility of applying low thicknesses of painting product, the minimizing of the overspray -- with the consequent drastic reduction in painting costs --, excellent aesthetical finishes, a strong reduction in processing wastes and possibility of use, in particular for painting materials in powder form, of coloured transparent layers, with the defects constituted by the stains and by the "formation of clouds" being prevented, being achieved.

In the mean time, higher technical characteristics are obtained in the paint coating film, in that an uniform-thickness deposit allows a longer useful life and a higher resistance to the chemical and atmospheric agents to be obtained; furthermore, inasmuch as it does not cause separating films to be originated between the support and the painting product, the process according to the present invention secures a better adhesion of the paint film to the painted article.

Among the non-conducting materials suitable for the process according to the present invention, glass, ceramic, plastics, rubber, wood, articles made from synthetic materials, can be mentioned for exemplifying purposes.

According to the instant invention, said water vapour containing atmosphere into which the articles leaving the chilling chamber are dipped, is ambient atmosphere.

If not, it can be a whatever suitable atmosphere suitably enriched with water vapour, and contained inside a chamber.

## Claims

1. Process of electrostatic painting of articles, in particular of articles (24) made from a non-electrical current- conducting material, characterised in that before said articles are fed to the step of electrostatic painting, they are first made to pass through a chilling chamber (14) in the presence of one or more cryogenic gas(es) fed to said chamber in the liquid state which gases are selected from carbon dioxide, nitrogen, argon, and then, as soon as they leave said chilling chamber, said so chilled articles are dipped into an atmosphere containing water vapour before being fed to the step of electrostatic painting, with a layer of frost being thus formed on the surface of said articles owing to the effect of the condensation of water vapour contained in said atmosphere.

2. Process according to claim 1, characterised in that said water vapour-containing atmosphere is ambient air.

3. Process according to claim 1, characterised in that it comprises the following steps: passage through said chilling chamber, dipping into the water vapour-containing atmosphere on leaving said chilling chamber, electrostatic painting of the articles.

4. Process according to claim 1, characterised in that it comprises the following steps: drying of said articles, passage of said articles through said chilling chamber, dipping of said articles into the atmosphere containing water vapour when leaving said chilling chamber, electrostatic painting of the articles.

5. Facility suitable for practically carrying out the process according to claim 1, characterised in that it comprises a chilling station (3) installed upstream said electrostatic painting step.

6. Facility according to claim 5, characterised in that said chilling station (3) comprises a chamber (14) into which said cryogenic gas, or a mixture of cryogenic gases, is fed in liquid phase through spray nozzles (23).

7. Facility according to claim 5, characterised in that the passage of said articles (24) through said chilling chamber (14) takes place continuously or by way of interrupted motion by means of conveyor means such as a conveyor belt (25), or overhead conveyor means (32), equipped with article-bearing frames (33).

8. Facility according to claim 5, characterised in that the passage of said articles (24) through said chilling chamber (14) takes place batchwise.

9. Facility according to claim 5, characterised in that between said chilling station (3) and said painting step an atmosphere is interposed, which contains water vapour and into which said articles are dipped when moving between said two successive stations.

10. Facility according to claim 5, characterised in that said water vapour-containing atmosphere is contained inside a chamber.

## Patentansprüche

1. Verfahren zum elektrostatischen Beschichten von Gegenständen, insbesondere von Gegenständen (24), welche aus elektrisch nichtleitendem Material gefertigt sind, dadurch gekennzeichnet, daß, bevor diese Gegenstände dem Schritt der elektrostatischen Beschichtung zugeführt werden, diese durch eine Abschreckkammer (14) in Gegenwart von einem oder mehreren kryogenen Gas(en), welche in flüssigem Zustand in die Kammer eingeleitet werden, geführt werden, welche Gase aus Kohlendioxid, Stickstroff, Argon gewählt sind, woran, sobald die Gegenstände die Abschreckkammer verlassen, die so abgeschreckten Gegenstände in eine Wasserdampf enthaltende Atmosphäre eingetaucht werden, wobei eine Frostschicht auf der Oberfläche der Gegenstände durch die Kondensation des in der Atmosphäre enthaltenen Wasserdampfes gebildet wird, bevor diese der elektrostatischen Beschichtung zugeführt werden.

2. Verfahren nach Anspruch 1, dadurch gekennzeichnet, daß die Wasserdampf enthaltende Atmosphäre Umgebungsluft ist.

3. Verfahren nach Anspruch 1, dadurch gekennzeichnet, daß folgende Schitte umfaßt sind: Durchleiten durch die Abschreckkammer, Eintauchen in die Wasserdampf enthaltende Atmosphäre nach Verlassen der Abschreckkammer, elektrostatisches Beschichten der Gegenstände.

4. Verfahren nach Anspruch 1, dadurch gekennzeichnet, daß folgende Schitte umfaßt sind: Trocknen der Artickel, Durchleiten der Artikel durch die Abschreckkammer, Eintauchen der Artikel in die Wasserdampf enthaltende Atmosphäre, wenn die Gegenstände die Abschreckkammer verlassen, elektrostatisches Beschichten der Gegenstände.

5. Vorrichtung zur Durchführung des Verfahrens nach Anspruch 1, dadurch gekennzeichnet, daß sie eine Abschreckreinrichtung (3) stromaufwärts des elektromagnetischen Beschichtungsschrittes aufweist.

6. Vorrichtung nach Anspruch 5, dadurch gekennzeichnet, daß die Abschreckeinrichtung (3) eine Kammer (14) umfaßt, in welche das kryogene Gas oder die Mischung von kryogenen Gasen durch Sprühdüsen (23) einbringbar ist.

7. Vorrichtung nach Anspruch 5, dadurch gekennzeichnet, daß der Durchgang der Gegenstände (24) durch die Abschreckkammer (14) kontinuierlich oder durch eine unterbrochene Bewegung von Förderern, wie beispielsweise Förderbändern (25) oder obenliegende Fördereinrichtungen (32), versehen mit Tragrahmen (33) für die Gegenstände, erfolgt.

8. Vorrichtung nach Anspruch 5, dadurch gekennzeichnet, daß der Durchgang der Gegenstände (24) durch die Abschreckkammer (14) chargenweise stattfindet.

9. Vorrichtung nach Anspruch 5, dadurch gekennzeichnet, daß zwischen der Abschreckeinrichtung (3) und dem Beschichtungsschritt eine Atmosphäre zwischengeschaltet ist, welche Wasserdampf enthält und in welche die Gegenstände eingetaucht werden, wenn sie zwischen den aufeinanderfolgenden Stationen bewegt werden.

10. Vorrichtung nach Anspruch 5, dadurch gekennzeichnet, daß die Wasserdampf enthaltende Atmosphäre in einer Kammer enthalten ist.

## Revendications

1. Procédé de peinture d'articles par voie électrostatique, en particulier d'articles (24) en matériau non électro-conducteur, caractérisé en ce que, avant d'amener lesdits articles au poste de peinture par voie électrostatique, on les fait d'abord passer à travers une chambre de réfrigération (14) en présence d'un ou plusieurs gaz cryogénique(s) envoyé(s) à ladite chambre sous forme liquide, gaz choisi(s) parmi le dioxyde de carbone, l'azote, l'argon, puis, dès que lesdits articles quittent la chambre de réfrigération, on plonge ces articles ainsi réfrigérés dans une atmosphère contenant de la vapeur d'eau avant de les envoyer au poste de peinture par voie électrostatique, formant de ce fait une couche de givre à la surface desdits articles en raison de la condensation de la vapeur d'eau contenue dans ladite atmosphère.

2. Procédé selon la revendication 1, caractérisé en ce que ladite atmosphère contenant de la vapeur d'eau est l'air ambiant.

3. Procédé selon la revendication 1, caractérisé en ce qu'il comprend les étapes suivantes : passage des articles à travers ladite chambre de réfrigération, plongée des articles dans l'atmosphère contenant de la vapeur d'eau à la sortie de ladite chambre de réfrigération, peinture des articles par voie électrostatique.

4. Procédé selon la revendication 1, caractérisé en ce qu'il comprend les étapes suivantes : séchage desdits articles, passage desdits articles à travers ladite chambre de réfrigération, plongée desdits articles dans une atmosphère contenant de la vapeur d'eau à la sortie de ladite chambre de réfrigération, peinture des articles par voie électrostatique.

5. Installation appropriée à la mise en oeuvre pratique du procédé conforme à la revendication 1, caractérisée en ce qu'elle comprend un poste de réfrigération (3) installé en amont dudit poste de peinture par voie électrostatique.

6. Installation selon la revendication 5, caractérisée en ce que ledit poste de réfrigération (3) comprend une chambre (14) dans laquelle est envoyé ledit gaz cryogénique, ou un mélange de gaz cryogéniques, en phase liquide par des buses de pulvérisation (23).

7. Installation selon la revendication 5, caractérisée en ce que le passage desdits articles (24) à travers ladite chambre de réfrigération (14) a lieu en continu ou par déplacements intermittents grâce à un moyen de convoyage comme un convoyeur à courroie (25) ou un moyen (32) formant convoyeur aérien équipé de structures (33) de transport des articles.

8. Installation selon la revendication 5, caractérisée en ce que le passage desdits articles (24) à travers ladite chambre de réfrigération (14) a lieu par lots.

9. Installation selon la revendication 5, caractérisée en ce que, entre ledit poste de réfrigération (3) et ledit poste de peinture, est intercalée une atmosphère qui contient de la vapeur d'eau et dans laquelle lesdits articles sont plongés lorsqu'ils se déplacent entre lesdits deux postes successifs.

10. Installation selon la revendication 5, caractérisée en ce que ladite atmosphère contenant de la vapeur d'eau est contenue dans une chambre.
